# FASCICULE DE BREVET EUROPEEN

(11) **EP 2 670 651 B1**
(45) Date de publication et mention de la délivrance du brevet: **11.03.2015**
(21) Numéro de dépôt: 12705361.9
(22) Date de dépôt: 23.01.2012
(51) Int. Cl.: B62D 25/20, B62D 25/24, B62D 25/02

(54) **BAS DE CAISSE POUR VEHICULE AUTOMOBILE PRÉSENTANT UN REVÊTEMENT ANTI-GRAVILLONAGE N'OBSTRUANT LE ZONES DE DRAINAGE D'EAU DE PLUIE ET VEHICULE COMPORTANT UN TEL BAS DE CAISSE**
SCHWELLENABDECKUNG FÜR EIN KRAFTFAHRZEUG MIT EINER ABSPLITTERUNGSVERHINDERNDEN BESCHICHTUNG OHNE REGENWASSERABFLUSSBLOCKIERUNG UND FAHRZEUG MIT EINER SOLCHEN SCHWELLENABDECKUNG
ROCKER PANEL INTENDED FOR A MOTOR VEHICLE AND HAVING AN ANTI-GRITTING COATING NOT OBSTRUCTING THE RAINWATER DRAINAGE AREAS, AND VEHICLE COMPRISING SUCH A ROCKER PANEL

(30) Priorité: 03.02.2011 FR 1150846
(43) Date de publication de la demande: 11.12.2013
(73) Titulaire: Peugeot Citroën Automobiles SA, 78140 Vélizy Villacoublay (FR)
(72) Inventeur: DARTHUY, Laurent, F-94100 St Maur Des Fosses (FR); NGUYEN, Viet Serge, F-94550 Chevilly Larue (FR)
(74) Mandataire: Fosse, Danièle
(86) Numéro de dépôt international: PCT/FR2012/050144
(87) Numéro de publication internationale: WO 2012/104520

(56) Documents cités:
- GB-A- 589 164
- JP-A- 2006 123 761
- JP-A- 2007 196 715
- JP-A- 2009 173 202
- JP-U- 63 119 181

## Description

La présente invention concerne un bas de caisse pour véhicule, tel qu'un véhicule automobile, et un véhicule équipé d'un tel bas de caisse.

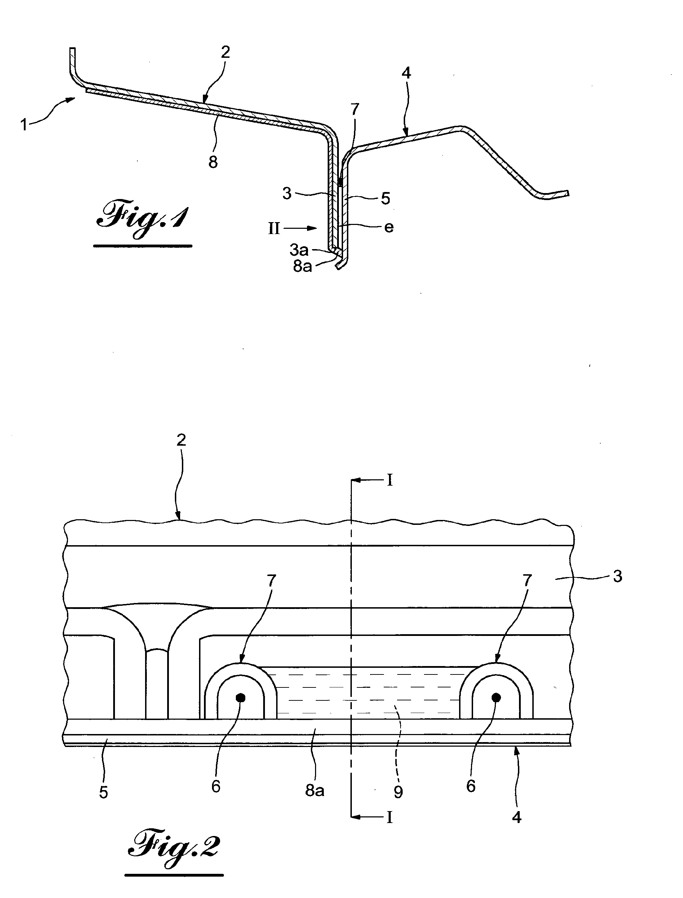

La figure 1 représente en section transversale la partie inférieure d'un bas de caisse 1 pour véhicule automobile, selon l'état de la technique et la figure 2 est une vue agrandie de côté suivant la flèche II de la figure 1.

Ce bas de caisse comprend un longeron intérieur 2 pourvu d'une bordure inférieure 3 et un longeron extérieur ou côté de caisse 4 également pourvu d'une bordure inférieure 5. Le plancher du véhicule, non représenté, est fixé par soudage au longeron intérieur 2.

Les bordures inférieures 3, 5 des deux longerons intérieur 2 et extérieur 4 sont reliées l'une par rapport à l'autre par soudage notamment par des points de soudure électrique 6 formés le long des deux bordures assemblées 3, 5 en des emplacements distincts constitués respectivement par les emboutis 7 réalisés dans la bordure inférieure 3 du longeron intérieur 2 et au voisinage du bord inférieur de cette bordure.

Les emboutis 7 sont en appui sur la face interne de la bordure 5 du longeron extérieur 4 en laissant subsister un espace e ou jeu séparant des deux bordures 3, 5 notamment dans chaque zone entre deux emboutis consécutifs 7.

Une fois les deux longerons 2, 4 assemblés l'un à l'autre, un revêtement anti-gravillonnage 8 est appliqué par pulvérisation sur les faces inférieures comprenant la bordure 3 du longeron intérieur 2 afin de protéger les faces exposées à l'impact des gravillons pendant une durée pouvant atteindre douze ans, voire plus.

Le revêtement anti-gravillonnage 8 généralement à base de PVC est appliqué notamment le long du bord inférieur de la bordure 3 du longeron intérieur 2 et tout le long de la partie de face adjacente du bord de la bordure 5 du longeron extérieur 4 en obstruant vers le bas les espaces séparant les deux bordures 3, 5 dans les zones entre les emboutis consécutifs 7, comme symbolisé en 8a.

Cette obstruction a pour inconvénient de constituer, suite à des infiltrations d'eau entre les deux bordures 3, 5, des zones ou poches de rétention d'eau entre les emboutis consécutifs 7 comme symbolisé par la référence 9 en figure 2.

De telles zones de rétention d'eau provoquent à la longue une corrosion importante dans l'interface entre les deux bordures inférieures 3, 5 des deux longerons 2, 4 en tôle. JP2007196715 **et** JP2006123761 **décrivent de tels bas de caisse**, conformes au préambule de la revendication 1.

La présente invention a pour but de remédier à l'inconvénient ci-dessus.

A cet effet, l'invention propose un bas de caisse pour véhicule, tel qu'un véhicule automobile, comprenant un longeron intérieur et un longeron extérieur comportant respectivement deux bordures inférieures qui sont reliées l'une par rapport à l'autre par des soudures situées en des emplacements distincts le long des deux bordures en laissant subsister un espace séparant les deux bordures dans chaque zone entre deux emplacements de soudure consécutifs, et qui est caractérisé en ce que le bord inférieur de la bordure inférieure du longeron intérieur comporte plusieurs pattes, chacune située dans une zone entre deux emplacements de soudure consécutifs, et configurées, relativement à la partie de bord inférieure de la bordure inférieure du longeron externe, pour empêcher l'obturation complète au niveau de ce bord inférieur de l'espace entre les deux bordures lorsqu'est appliquée une couche de matière anti-gravillonnage sur au moins la bordure inférieure du longeron intérieur.

Avantageusement, chaque patte fait saillie du bord inférieur de la bordure inférieure du longeron intérieur de manière à définir relativement à la partie de bord inférieure de la bordure inférieure du longeron interne un jeu suffisant pour ne pas être obturé par la couche anti-gravillonnage.

Chaque emplacement de soudure est constitué par un embouti de la bordure inférieure du longeron intérieur et la soudure appliquée dans cet embouti est un point de soudure électrique.

La couche de matière anti-gravillonnage est à base de PVC, pulvérisée sur au moins la bordure inférieure du longeron intérieur.

Avantageusement, les pattes sont réalisées par découpage de la bordure inférieure du longeron intérieur.

L'invention vise également un longeron intérieur d'un bas de caisse pour un véhicule, tel qu'un véhicule automobile, comprenant une bordure destinée à être reliée par soudage à une bordure d'un longeron externe du bas de caisse, caractérisée en ce que le bord inférieur de la bordure du longeron intérieur comporte une pluralité de pattes disposées régulièrement le long de ce bord et faisant saillie relativement à la face de bordure du longeron opposée à celle destinée à être reliée à la bordure du longeron externe.

L'invention vise enfin un véhicule, tel qu'un véhicule automobile, comprenant un bas de caisse tel que défini précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en section transversale suivant la ligne I-I de la figure 2 de la partie inférieure d'un bas de caisse de l'art antérieur ;
- la figure 2 est une vue de côté agrandie suivant la flèche II de la figure 1 ;
- la figure 3 est une vue de côté semblable à celle de la figure 2 et représentant la bordure inférieure du longeron intérieur pourvue de pattes de protection conformes à l'invention ; et
- la figure 4 est une vue partielle en perspective agrandie des deux bordures inférieures des longerons du bas de caisse et montrant l'une des pattes solidaires de la bordure inférieure du longeron intérieur.

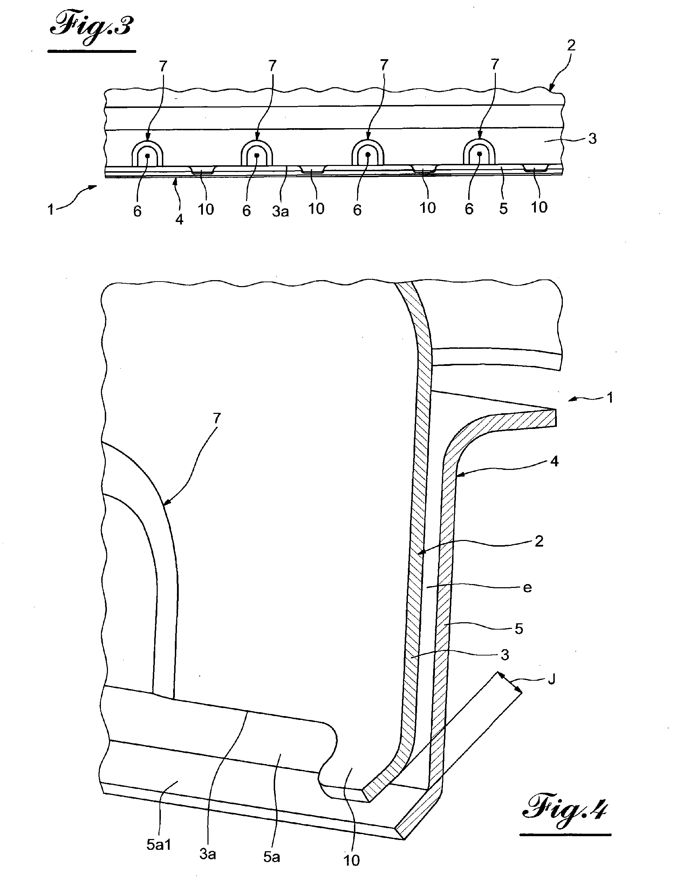

Le bas de caisse pour véhicule automobile tel que représenté aux figures 3 et 4 est d'une manière générale identique au bas de caisse décrit en liaison avec les figures 1 et 2.

Ainsi, le bas de caisse des figures 3 et 4 comprend un longeron intérieur 2 et un longeron extérieur 4 comportant respectivement deux bordures inférieures 3, 5 qui sont reliées l'une par rapport à l'autre par des points de soudure électrique 6 situés respectivement aux fonds d'emboutis 7 réalisés dans la bordure inférieure 3 du longeron intérieur 2 en étant régulièrement espacés le long du bord inférieur 3a de la bordure inférieure 3.

Une fois les deux bordures 3, 5 assemblées l'une à l'autre par les points de soudure électrique 6, les emboutis 7, qui sont en appui sur la face interne de la bordure inférieure 5 du longeron extérieur 5, laissent subsister un espace e séparant les deux bordures 3, 5 notamment dans chaque zone située entre deux emboutis consécutifs 7, zone dans laquelle peut s'infiltrer de l'eau.

Selon l'invention, la bordure inférieure 3 du longeron intérieur 2 est pourvue de plusieurs pattes 10 solidaires du bord inférieur 3a de la bordure inférieure 3, chaque patte 10 étant située à une zone du bord 3a entre deux emboutis consécutifs 7.

Les pattes 10 sont configurées pour empêcher l'obturation complète vers le bas au niveau du bord inférieur 3a de l'espace entre les deux bordures 3, 5 des longerons 2, 4 lorsqu'est pulvérisée une couche de matière anti-gravillonnage à base de PVC sur au moins la bordure inférieure 3 du longeron intérieur 2 et la partie de bord inférieur de la bordure 5 du longeron 4.

Chaque patte 10 fait saillie du bord inférieur 3a de la bordure inférieure 3 du longeron intérieur 2 en étant recourbée de manière à définir relativement à la partie de bord inférieur 5a de la bordure 5 du longeron extérieur 4 un jeu J suffisamment important pour ne pas être comblé par la couche anti-gravillonnage, non représentée, pulvérisée notamment sur la bordure inférieure 3 du longeron intérieur 2 et la partie 5a de la bordure 5. Chaque patte 10 peut être coudée du côté de la face de la bordure 3 opposée à la face interne de la bordure 5 en étant sensiblement parallèle à et au-dessus d'un bord saillant inférieur 5a₁ de la partie 5a de la bordure 5. Les pattes 10 peuvent être solidarisées au bord 3a de la bordure 3 en étant régulièrement espacées le long de ce bord.

Les pattes 10 peuvent être réalisées par découpage du contour de la bordure inférieure 3 du longeron intérieur 2.

Bien entendu, les pattes 10 peuvent avoir des formes et dimensions différentes de celles de la patte représentée en figure 4 dès l'instant qu'elles soient configurées pour réaliser le jeu J suffisant pour empêcher l'obstruction par la couche anti-gravillonnage lors de sa pulvérisation sur la partie inférieure du longeron intérieur 2 des parties d'espace entre les bordures 3, 5 où se trouvent les pattes 10.

Ainsi, le jeu J entre chaque patte 10 de la bordure inférieure 3 et la partie de bord inférieur de la bordure intérieure 5 constitue un orifice d'évacuation d'eau susceptible de s'infiltrer dans des espaces définis dans les zones entre les emboutis consécutifs 5, empêchant de la sorte tout risque de corrosion de l'interface entre les deux bordures inférieures 3, 5 des longerons intérieur 2 et extérieur 4.

L'invention est une conception extrêmement simple et peu coûteuse tout en étant efficace pour évacuer par gravité l'eau susceptible de s'infiltrer dans l'interface entre les deux bordures inférieures soudées l'une par rapport à l'autre des deux longerons intérieur 2 et extérieur 4 d'un bas de caisse de véhicule automobile.

## Revendications

1. Bas de caisse pour véhicule, tel qu'un véhicule automobile, comprenant un longeron intérieur (2) et un longeron extérieur (4) comportant respectivement deux bordures inférieures (3,5) qui sont reliées l'une par rapport à l'autre par des soudures (6) situées en des emplacements distincts (7) le long des deux bordures (3,5) en laissant subsister un espace (e) séparant les deux bordures (3,5) dans chaque zone entre deux emplacements de soudures consécutifs (7), **caractérisé en ce que** le bord inférieur (3a) de la bordure inférieure (3) du longeron intérieur (2) comporte plusieurs pattes (10) disposées régulièrement le long de ce bord et faisant saillie relativement à la face de la bordure (3) du longeron (2) opposée à celle destinée à être reliée à la bordure du longeron externe (4), chacune située dans une zone entre deux emplacements de soudures consécutifs (7), et configurées, **relativement à la partie de bord inférieure (5a) de la bordure inférieure du longeron externe (4),** pour empêcher l'obturation complète au niveau de ce bord inférieur (3a) de l'espace entre les deux bordures (3,5) lorsqu'est appliquée une couche de matière anti-gravillonnage (8) sur au moins la bordure inférieure (3) du longeron intérieur (2).

2. Bas de caisse selon la revendication 1, **caractérisé en ce que** chaque patte (10) fait saillie du bord inférieur (3a) de la bordure inférieure (3) du longeron intérieur (2) de manière à définir relativement à la partie de bord inférieure (5a) de la bordure inférieure du longeron externe (4) un jeu suffisant (J) pour ne pas être obturé par la couche anti-gravillonnage (8).

3. Bas de caisse selon la revendication 1 ou 2, **caractérisé en ce que** chaque emplacement de soudure (7) est constitué par un embouti de la bordure inférieure (3) du longeron intérieur (2) et la soudure (6) appliquée dans cet embouti est un point de soudure électrique.

4. Bas de caisse selon l'une des revendications précédentes, **caractérisé en ce que** la couche de matière anti-gravillonnage (8) est à base de PVC pulvérisé sur la au moins la bordure inférieure (3) du longeron intérieur (2).

5. Bas de caisse selon l'une des revendications précédentes, **caractérisé en ce que** les pattes (10) sont réalisées par découpage de la bordure inférieure (3) du longeron intérieur (2).

6. Longeron intérieur d'un bas de caisse pour un véhicule, tel qu'un véhicule automobile, comprenant une bordure (3) destinée à être reliée par soudage à une bordure (5) d'un longeron externe (4) du bas de caisse, **caractérisé en ce que** le bord inférieur de la bordure (3) du longeron intérieur (2) comporte une pluralité de pattes (10) disposées régulièrement le long de ce bord et faisant saillie relativement à la face de la bordure (3) du longeron (2) opposée à celle destinée à être reliée à la bordure du longeron externe (4).

7. Véhicule, tel qu'un véhicule automobile, comprenant un bas de caisse (1) selon l'une quelconque des revendications 1 à 4.

## Patentansprüche

1. Unterholm für ein Fahrzeug, wie zum Beispiel ein Kraftfahrzeug, einen inneren Längsträger (2) und einen äußeren Längsträger (4) umfassend, welche jeweils zwei Unterkanten (3, 5) enthalten, die miteinander durch Schweißnähte (6) verbunden sind, die sich an verschiedenen Stellen (7) entlang der beiden Unterkanten (3, 5) befinden und einen Freiraum (e) hinterlassen, der die beiden Unterkanten (3, 5) in jeder Zone zwischen zwei aufeinanderfolgenden Schweißnähten (7) voneinander trennt, **dadurch gekennzeichnet, dass** der untere Rand (3a) der Unterkante (3) des inneren Längsträgers (2) mehrere Laschen (10) umfasst, die in regelmäßigen Abständen entlang dieses Randes angeordnet sind, und die im Verhältnis zur Fläche der Kante (3) des Längsträgers (2) überstehen, die sich gegenüber jener befindet, welche dazu bestimmt ist, mit der Kante des äußeren Längsträgers (4) verbunden zu werden, wobei sich jede davon in einer Zone zwischen zwei aufeinanderfolgenden Schweißstellen (7) befindet, und sie im Verhältnis zum Abschnitt des unteren Randes (5a) der Unterkante des äußeren Längsträgers (4) konfiguriert sind, um die vollständige Abdeckung des Freiraumes zwischen den beiden Kanten (3, 5) im Bereich dieses unteren Randes (3a) zu verhindern, wenn eine Steinschlagschutzschicht (8) auf zumindest die Unterkante (3) des inneren Längsträgers (2) aufgetragen wird.

2. Unterholm nach Anspruch 1, **dadurch gekennzeichnet, dass** jede Lasche (10) über den unteren Rand (3a) der Unterkante (3) des inneren Längsträgers (2) übersteht, sodass in Bezug auf den Abschnitt des unteren Randes (5a) der Unterkante des äußeren Längsträgers (4) ein Spiel (J) definiert wird, das ausreicht, um nicht von der Steinschlagschutzschicht (8) abgedeckt zu werden.

3. Unterholm nach Anspruch 1 oder 2, **dadurch gekennzeichnet, dass** jede Schweißstelle (7) durch einen Stulp der Unterkante (3) des inneren Längsträgers (2) gebildet wird, und die in diesem Stulp angebrachte Schweißnaht (6) ein elektrischer Schweißpunkt ist.

4. Unterholm nach einem der vorherigen Ansprüche, **dadurch gekennzeichnet, dass** die Steinschlagschutzschicht (8) ein Mittel auf PVC-Basis ist, das zumindest auf die Unterkante (3) des inneren Längsträgers (2) gesprüht wird.

5. Unterholm nach einem der vorherigen Ansprüche, **dadurch gekennzeichnet, dass** die Laschen (10) durch Ausschneiden der Unterkante (3) des inneren Längsträgers (2) realisiert werden.

6. Innerer Längsträger eines Unterholms für ein Fahrzeug, wie zum Beispiel ein Kraftfahrzeug, eine Kante (3) umfassend, die dazu bestimmt ist, durch Verschweißen mit einer Kante (5) eines äußeren Längsträgers (4) des Unterholms verbunden zu werden, **dadurch gekennzeichnet, dass** der untere Rand der Kante (3) des inneren Längsträgers (2) eine Vielzahl von Laschen (10) umfasst, die in regelmäßigen Abständen entlang dieses Randes angeordnet sind, und die im Verhältnis zur Fläche der Kante (3) des Längsträgers (2) überstehen, die sich gegenüber jener befindet, die dazu bestimmt ist, mit der Kante des äußeren Längsträgers (4) verbunden zu werden.

7. Fahrzeug, wie zum Beispiel ein Kraftfahrzeug, einen Unterholm (1) nach irgendeinem der Ansprüche 1 bis 4 umfassend.

## Claims

1. Rocker panel for a vehicle, for example a motor vehicle, comprising an inner side rail (2) and an outer side rail (4) respectively containing two bottom edges (3, 5), connected in relation to each other by welds (6) located in separate sites (7) along the two edges (3, 5), leaving behind a space (e) separating the two edges (3, 5) in each area between two consecutive weld sites (7), **characterised in that** the lower rim (3a) of the bottom edge (3) of the inner side rail (2) comprises a plurality of lugs (10), each of which is located regularly along this rim and projecting in relation to the surface of the edge (3) of the side rail (2) opposite to that intended to be connected to the edge of the outer side rail (4), each being located in an area between two consecutive weld sites (7), and configured, in relation to the portion of lower rim (5a) of the bottom edge of the outer side rail (4), to prevent complete sealing, at this lower rim (3a), of the space between the two edges (3, 5) when a layer of anti-gritting material (8) is applied onto at least the bottom edge (3) of the inner side rail (2).

2. Rocker panel according to claim 1, **characterised in that** each lug (10) protrudes from the lower rim (3a) of the bottom edge (3) of the inner side rail (2) such that it defines in relation to the portion of lower rim (5a) of the bottom edge of the outer side rail (4) sufficient clearance (J) so as not to be sealed by the anti-gritting layer (8).

3. Rocker panel according to claim 1 or 2, **characterised in that** each weld site (7) is comprised from a stamped section of the bottom edge (3) of the inner side rail (2) and the weld (6) applied in this stamped section is an electric welding spot.

4. Rocker panel according to one of the previous claims, **characterised in that** the layer of anti-gritting material (8) is made from PVC sprayed on at least the bottom edge (3) of the inner side rail (2).

5. Rocker panel according to one of the previous claims, **characterised in that** the lugs (10) are made by cutting the bottom edge (3) of the inner side rail (2).

6. Inner side rail of a rocker panel for a vehicle, for example a motor vehicle, comprising an edge (3) designed to be connected by welding to an edge (5) of an outer side rail (4) of the rocker panel, **characterised in that** the lower rim of the bottom edge (3) of the inner side rail (2) comprises a plurality of lugs (10), each of which is located regularly along this rim and projecting in relation to the surface of the edge (3) of the side rail (2) opposite to that intended to be connected to the edge of the outer side rail (4).

7. Vehicle, for example a motor vehicle, comprising a rocker panel (1) according to any one of claims 1 to 4.
